(19) Europäisches Patentamt / European Patent Office / Office européen des brevets

(11) **EP 2 028 281 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(51) Int Cl.:
*C21D 1/42* (2006.01)  *C21D 9/60* (2006.01)

(21) Anmeldenummer: 08013048.7

(22) Anmeldetag: **19.07.2008**

(54) **Wärmebandlung von flexibel gewalztem Band**

Heat treatment of flexibly rolled sheet

Traitement thermique d'une bande laminée flexible

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **20.08.2007 DE 102007039279**

(43) Veröffentlichungstag der Anmeldung:
**25.02.2009 Patentblatt 2009/09**

(73) Patentinhaber: **Muhr und Bender KG**
**57439 Attendorn (DE)**

(72) Erfinder:
• **Pohl, Stefan, Dipl.-Wirt.-Ing.**
**57482 Wenden (DE)**
• **Hauger, Andreas, Dr.-Ing.**
**57439 Attendorn (DE)**

(74) Vertreter: **Neumann, Ernst Dieter et al**
**Neumann Müller Oberwalleney & Partner**
**Patentanwälte**
**Overstolzenstrasse 2a**
**50677 Köln (DE)**

(56) Entgegenhaltungen:
**EP-A- 0 107 991    EP-A- 0 353 749**
**EP-A- 1 610 591    WO-A-2006/088067**
**DE-A1- 1 803 129   DE-A1-102004 023 886**
**JP-A- 60 002 634   JP-A- 2006 241 537**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur kontinuierlichen Wärmebehandlung von Bandmaterial aus Stahl mit über der Länge periodisch veränderlicher Dicke. Derartiges Band wird unter dem Begriff flexibel gewalztes Band mit zeitlich veränderlichem Walzspalt kontinuierlich hergestellt.

Aus der DE 10 2004 023 886 A1 sind ein Verfahren und eine Vorrichtung zur Veredelung von flexibel gewalztem Bandmaterial bekannt. Dabei wird ein vom Coil abgewickeltes gewalztes Bandmaterial in einem einheitlichen kontinuierlichen Durchlauf durch eine Behandlungslinie aus Glühstrecke, Abschreckeinheit, Vorheizeinheit und Zinkpott wärmebehandelt und feuerverzinkt.

Aus der JP 60 002 634 A ist ein Verfahren zum kontinuierlichen Wärmebehandeln eines Metallbandes bekannt. Hierfür ist eine Aufheizzone, eine Haltezone und eine Abkühlzone vorgesehen.

Aus der EP 0 107 991 A1 ist eine Vorrichtung und ein Verfahren zur Wärmebehandlung von Metallband bekannt, die eine induktive Heizvorrichtung und eine weitere Heizvorrichtung aufweist.

Aus der DE 1 803 129 A ist eine Einrichtung zum induktiven Durchlauferwärmen von Bändern oder Blechen bekannt. Hierfür sind Leiter zu beiden Seiten des Werkstücks gegeneinander versetzt angeordnet.

Aus der EP 0 561 667 A1 ist ein Verfahren und eine Anlage zur Wärmebehandlung eines Metallbandes bekannt. Die Anlage weist eine induktive Heizvorrichtung und einen traditionellen Heizbereich sowie einen Kühlbereich auf.

Flexibel gewalztes Band mit periodisch veränderlichen Blechdicken wird im Kaltwalzprozeß erzeugt. Nach dem Kaltwalzen muß des Bandmaterial im allgemeinen wärmebehandelt werden, um die beim Kaltwalzen eingebrachte Kaltverfestigung abzubauen und somit die plastische Verformbarkeit des Bandmaterials wieder zu erhöhen. Problematisch ist hierbei der eingesetzte Erwärmungsprozeß. Bekannt ist das Erwärmen vollständiger Coils in Hochkonvektionshaubenglühöfen. Hierbei ist der Glühzyklus jedoch sehr lang, da das Material mit Aufheizraten von kleiner als 0,1 K/sec und Abkühlraten von kleiner als 0,01 K/sec gefahren wird.

Mehrphasenstähle benötigen zur Herstellung des mehrphasigen Gefüges jedoch schnelle Aufheiz- und Abkühlraten. Diese sind mit Hilfe von Hochkonvektionshaubenglühöfen nicht darstellbar. Mehrphasenstähle müssen daher im Durchlauf kontinuierlich wärmebehandelt werden. Hierbei wird das Bandmaterial vom Coil abgewickelt und das Band dann in einem oder mehreren aufeinander abgestimmten Öfen, nämlich hauptsächlich Strahlungs- und Hochkonvektionsöfen, bis in den αγ-Bereich aufgeheizt und gehalten, bevor es in einer Schnellabkühlungsvorrichtung abgeschreckt wird, wodurch bei geeigneter Auswahl der Qualität des Bandmaterials die unterschiedlichen Phasenanteile eines Mehrphasenstahls gebildet werden.

Die induktive Erwärmung zählt zu den elektrischen Erwärmungsverfahren, wobei die Wärmeenergie durch Widerstandswärme direkt im Werkstück bzw. Band erzeugt wird. Bei der Längsfelderwärmung läuft das magnetische Feld parallel zur Oberfläche des Bandes. Dadurch werden im Band Wirbelströme induziert, die ebenfalls parallel zur Bandoberfläche auf beiden Seiten des Bandes in entgegengesetzte Richtung fließen. Diese Wirbelströme führen zur Bildung innerer Wärmequellen, die das Band erhitzen. Das magnetische Wechselfeld und die Stromdichte fallen vom Werkstoffrand ins Bandinnere ab. Die Eindringtiefe δ bezeichnet den Abstand vom Materialrand, an dem das magnetische Feld auf 63 % des Außenfeldes abgeklungen ist.

Die Eindringtiefe bezeichnet damit die Entfernung von der Oberfläche, an der Amplituden der magnetischen bzw. elektrischen Feldstärke um 37 %, nämlich um den Faktor 1/e abgenommen haben. Bei dünnem Band arbeitet man hauptsächlich mit Eindringtiefen δ <0,4 d (d= Dicke des Bandes), damit sich die Ströme im Bandinneren nicht aufheben. Die Wärme wird somit in einer Außenrandschicht erzeugt und gelangt durch Wärmeleitung ins Bandinnere. Die Eindringtiefe δ läßt sich durch die Wahl der Frequenz f einstellen.

Die Eindringtiefe δ errechnet sich mit

$$\delta = \frac{1}{2\pi} \cdot \sqrt{\frac{\rho \cdot 10^7}{f \cdot \mu}}$$

mit p: spezifischer elektrischer Widerstand
f: Frequenz
μ: Permeabilität.

Bei der Anwendung solcher Wärmebehandlungen auf Bandmaterial mit periodisch veränderlicher Dicke, also flexibel gewalztes Band, tritt das Problem auf, daß sich die unterschiedlich dicken Bereiche in Strahlungs- und Konvektionsöfen unterschiedlich schnell erwärmen. Bei einer grundsätzlich gleichen Wärmeeintragsrate innerhalb der Öfen ist am Ofenausgang die Temperatur der dünneren Bandabschnitte wesentlich höher, als die der dickeren Bandabschnitte. Dies gilt grundsätzlich auch für Induktionsöfen, bei denen mit Auswahl einer bestimmten Frequenz eine bestimmte Eindringtiefe des induzierten Stromes erzeugt wird, die somit absolut an dicken Bandabschnitten und an dünnen Bandabschnitten gleich ist, wobei der Wärmeeintrag etwa proportional zur Eindringtiefe δ ist. Auch hier werden somit die dünnen Bandabschnitte infolge ihrer geringeren Masse auf eine höhere Temperatur als die dicken Bandabschnitte erwärmt.

Unabhängig von der Art der Erwärmung verhindern die unterschiedlichen Ausgangstemperaturen, daß in nachfolgenden weiteren Wärmebehandlungsschritten, insbesondere bei einem Abschrecken, Bandmaterial mit homogenen Eigenschaften in den verschieden dicken Bereichen von flexibel gewalztem Band entsteht.

Hiervon ausgehend ist es Aufgabe der vorliegenden Erfindung, ein Verfahren bereitzustellen, mit dem es möglich ist, Bandmaterial mit über der Länge unterschiedlichen Blechdicken in kurzer Zeit auf Temperaturen zu erhitzen, die bei vorgegebenen Dikkenverhältnis/Massenverhältnis der Bandabschnitte unterschiedlicher Dicke variabel eingestellt werden können. Die Lösung hierfür besteht darin, daß eine kontinuierliche Erwärmung des Bandmaterials im Durchlauf durch einen Induktionsofen erfolgt, in dem das Bandmaterial mit konstanter Frequenz induktiv erwärmt wird, die so gewählt ist, daß die rechnerische Eindringtiefe δ des induzierten Stromes, bis zu der das magnetische Feld auf 63 % Feldstärke des Außenfeldes abgeklungen ist, größer ist, als die halbe Dicke der Bandabschnitte mit geringster Dicke ($d_2$).

Die rechnerische Eindringtiefe ist hierbei auf einen Körper mit unendlicher Dicke bezogen. Die Eindringtiefe δ ist hierbei die Dicke einer fiktiven Schicht, in der der gesamte induzierte Strom bei einer homogenen Verteilung fließen würde. Ihre Dicke ist durch die Abnahme der Feldstärke um den Faktor 1/e = 37 % gegeben, damit durch eine Restfeldstärke von 63 %. Die Eindringtiefe ist werkstoff- und frequenzabhängig.

Der hiermit erzielte Effekt ist, daß im Bereich der geringeren Banddicke sich die rechnerischen Eindringtiefen δ der induzierten Strome im Bandmaterial von beiden Seiten überdecken, wobei sich im Bereich der Überdeckung die induzierten Ströme aufheben, so daß nicht im gesamten Material eine induktive Erwärmung stattfindet.

Hiermit ist die effektiv eingebrachte Energie im dünneren Bereich ($d_2$) geringer, als im dickeren Bereich ($d_1$), wobei insbesondere die Eindringtiefe im dickeren Bereich frei wählbar bleibt. Eine Steigerung der berechneten Eindringtiefe δ wirkt sich hierbei auf den Wärmeeintrag im dünneren Bereich weniger aus, bestimmt aber weiterhin wesentlich die Aufheizrate des dickeren Bereichs. Vorzugsweise ist vorgesehen, daß das Bandmaterial mit konstanter Frequenz induktiv erwärmt wird, die so gewählt ist, daß die rechnerische Eindringtiefe δ des induzierten Stroms, bis zu der das magnetische Feld auf 63 % Feldstärke des Außenfeldes abgeklungen ist, geringer ist, als die halbe Dicke der Bandabschnitte mit größter Dicke ($d_1$).

Hiermit ist die Freiheit gegeben, die Frequenz des induzierten Stroms so zu wählen, daß im Bereich größerer Dicken Eindringtiefen effektiv dargestellt werden können, die größer sind als die halbe Dicke des dünnen Bandmaterials, das heißt, im dicken Bandmaterial ist die Eindringtiefe so zu steigern, daß der Wärmeeintrag maximiert wird. Der Wärmeeintrag in die dicken Bereiche kann somit wesentlich gesteigert werden, während der Wärmeeintrag in die dünnen Bandbereiche sich hierbei in geringem Ausmaß verändert.

Gemäß einer ersten Verfahrensführung können durch unterschiedlichen Wärmeeintrag in die Bandbereiche unterschiedlicher Dicke gezielt differenzierte Endtemperaturen am Ende des Durchlaufs durch den Induktionsofen eingestellt werden. Nach einer zweiten Verfahrensführung können bestimmte gleichmäßige Endtemperaturen an allen Bandbereichen am Ende der Durchlaufzeit eingestellt werden.

Die weiteren Wärmebehandlungsschritte können damit zu weitgehend homogenen Materialeigenschaften im dicken wie im dünnen Bandbereich führen, wahlweise jedoch auch zu gezielt und kontrolliert eingestellt inhomogenen Materialeigenschaften in den Bandbereichen unterschiedlicher Dicke. Beispielsweise ist es möglich, die dünneren Bereiche mit einer gezielt höheren oder gezielt geringeren Festigkeit zu fertigen, als die jeweils dickeren Bandbereiche.

Da die induktive Wärmebehandlung im Längsfeldinduktor ferromagnetische Eigenschaften des Materials voraussetzen, die bei der Curietemperatur von 769°C verlorengehen, ist eine induktive Erwärmung der hiermit beschriebenen Art nur bis zur Curietemperatur wirtschaftlich sinnvoll. Um Temperaturen oberhalb 700°C für ein Rekristallisationsglühen zu erzielen oder Temperaturen von oberhalb 800 C zum anschließenden den Härten erreichen zu können, ist vorgesehen, das Bandmaterial im Anschluß an die Induktionserwärmung im Durchlauf in einem Konvektions- oder Strahlungsofen auf eine weiter erhöhte Temperatur zu bringen.

Hierbei hat es sich als verteilhaft erwiesen, das Bandmaterial ca. 10 Sekunden induktiv und ca. 40 Sekunden durch Konvektion oder Strahlung auf eine Temperatur von über 800°C zu bringen. Bei Einsatz entsprechend legierter Stähle kann das Bandmaterial anschließend mit einer hohen Abkühlrate abgeschreckt werden, die zur Martensitbildung und damit zur Einstellung eines mehrphasigen Gefüges führen, beispielsweise unter Matensitbildung. Weitere bevorzugte Verfahrensmerkmale finden sich in den Unteransprüchen, auf die hiermit ergänzend Bezug genommen wird.

Die Erfindung umfaßt weiterhin eine Anlage zur Durchführung des Verfahrens, die in Reihenschaltung eine Blechdickenmessung, zumindest einen Induktionsofen, mit dem das Bandmaterial in der oben angegebenen Form erwärmbar ist, insbesondere mit einem Längsfeldinduktor, zumindest einen Konvektions- oder Strahlungsofen und eine Schnellabkühlungsvorrichtung, in der angegebenen Reihenfolge, umfaßt.

Die Erfindung wird nachstehend an einigen Prinzipdarstellungen und Schaubildern weiter verdeutlicht.

Figur 1    zeigt das Prinzipbild einer Anlage für eine erfindungsgemäße Verfahrensführung in Verknüpfung mit einer vereinfachten Darstellung des Temperaturverlaufes über die behandelte Bandlänge.

Figur 2     zeigt ein Prinzipbild eines Längsfeldinduktors mit durchlaufendem Blech

Figur 3     zeigt die Dickenverhältnisse des eingesetzten Bandmaterials

Figur 4     zeigt die Eindringtiefen bei der induktiven Erwärmung an Bandmaterial nach Figur 3

        a) nach dem Stand der Technik
        b) gemäß der Erfindung

Figur 5     zeigt den Temperaturverlauf für zwei verschiedene Blechdicken bei einer vorgegebenen Arbeitsfrequenz der induktiven Erwärmung von 3,48 Hz.

Figur 6     zeigt den Temperaturverlauf für zwei verschiedene Blechdicken bei Kom- bination von induktiver Erwärmung und Strahlungserwärmung über der Zeit.

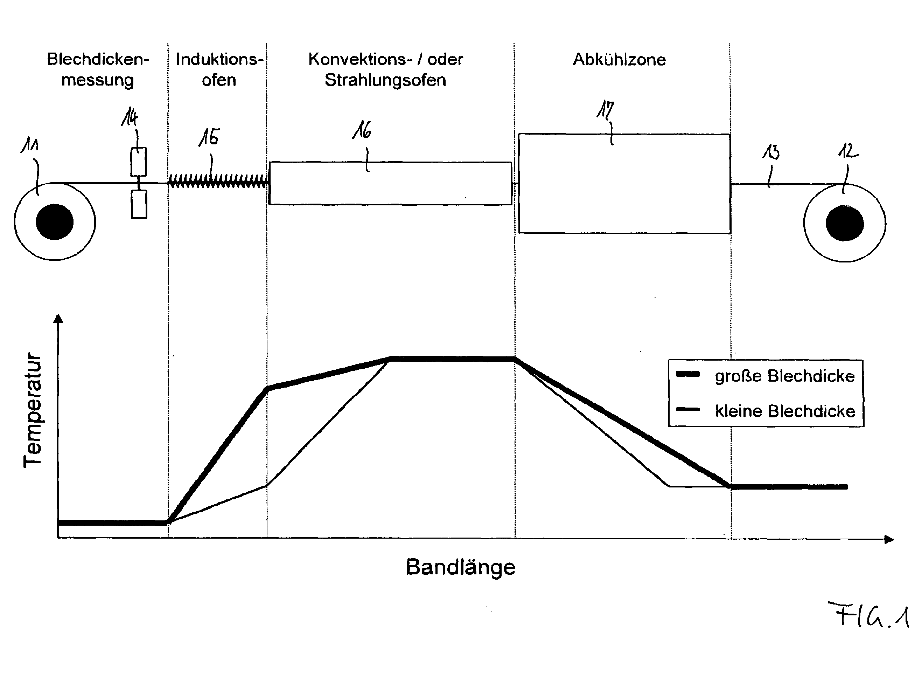

In Figur 1 ist im oberen Bildbereich das Prinzipbild einer erfindungsgemäßen Wärmebehandlung dargestellt, die einen abwickelnden Coil 11 links und einen aufhaspelnden Coil 12 rechts erkennen läßt, zwischen denen sich abgewickeltes Band 13 erstreckt. Zwischen den Coils 11 und 12 durchläuft das Band die Anlagengruppen Blechdickenmessung 14, Induktionsofen 15, Konvektions- oder Strahlungsofen 16 und Anlagengruppen der Abkühlzone 17. In einem Bandlängen-Temperatur-Diagramm ist der Temperaturverlauf zu der oben gezeigten Bandlänge für Bandabschnitte mit großer Blechdicke (dicke Linie) und für Bandabschnitte mit kleiner Blechdicke (dünne Linie) schematisch dargestellt. Bis zum Eintritt in den Induktionsofen 15 hält das Band dickenunabhängig seine Ausgangstemperatur, insbesondere Umgebungstemperatur. Im Induktionsofen 15 steigt gemäß dem erfindungsgemäßen Verfahren die Temperatur im Bereich großer Blechdicken stärker an, als im Bereich kleiner Blechdicken und unterscheidet sich hiermit von induktiver Erwärmung bekannter Art, bei der ein umgekehrtes Ergebnis zu erwarten wäre. Im Konvektions- oder Strahlungsofen 16 wird bei Vernachlässigung der unterschiedlichen Ausgangstemperatur bei etwa gleichem Wärmeeintrag die geringere Massen der Bereiche kleiner Blechdicke stärker erhöht, als die größeren Massen der Bereiche großer Blechdicke, bis sich die Temperatur beider Bereiche angeglichen hat. In der anschließenden Abkühlzone wird das Band auf eine Abschrecktemperatur zurückgekühlt, wobei die Abkühlung in Bereichen kleinerer Blechdicke mit einer etwas höheren Rate erfolgt, als im Bereich großer Blechdicke. Die hierbei zu erzielenden Materialeigenschaften sind etwa homogen in beiden Dickenbereichen.

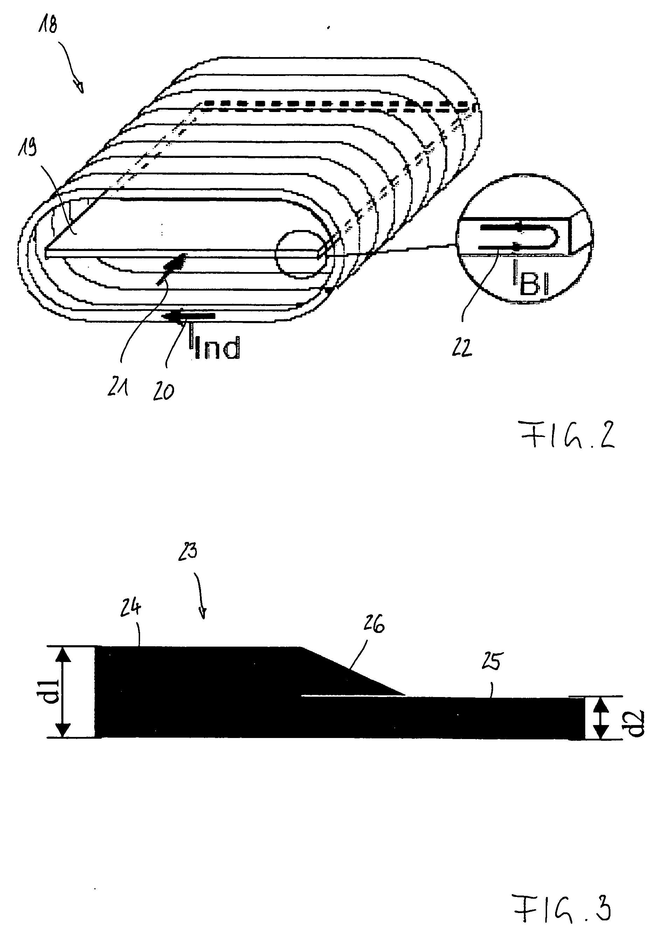

In Figur 2 ist ein Längsfeldinduktor 18 eines erfindungsgemäßen Induktionsofens zusammen mit einem durchlaufenden Blech 19 prinzipiell dargestellt.

Hierbei ist der Stromfluß im Induktor $I_{Ind}$ durch einen Pfeil 20 und die Bewegungsrichtung des Bandes durch ein Pfeil 21 angeordnet. In einer vergrößerten Einzelheit ist mit einem Pfeil 22 die Stromrichtung $I_{Bl}$ im Blech gezeigt, die vom Induktor initiiert ist. Es ist erkennbar, daß von den beiden Oberflächen ausgehend die Induktionsströme entgegengesetzt gerichtet sind, jeweils quer zur Bewegungsrichtung des Bleches. Das Blech kann hierbei als Bandabschnitt betrachtet werden.

In Figur 3 ist in einem Längsschnitt durch flexibel gewalztes Bandmaterial 23 die Dicke d1 eines Bandabschnittes 24 mit größerer Blechdicke und die Dicke d2 eines Bandabschnittes 25 mit kleinerer Blechdicke bezeichnet. Bei Veränderung des Walzspaltes ergibt sich ein stetiger Übergang 26, der im weiteren jedoch vernachlässigt wird.

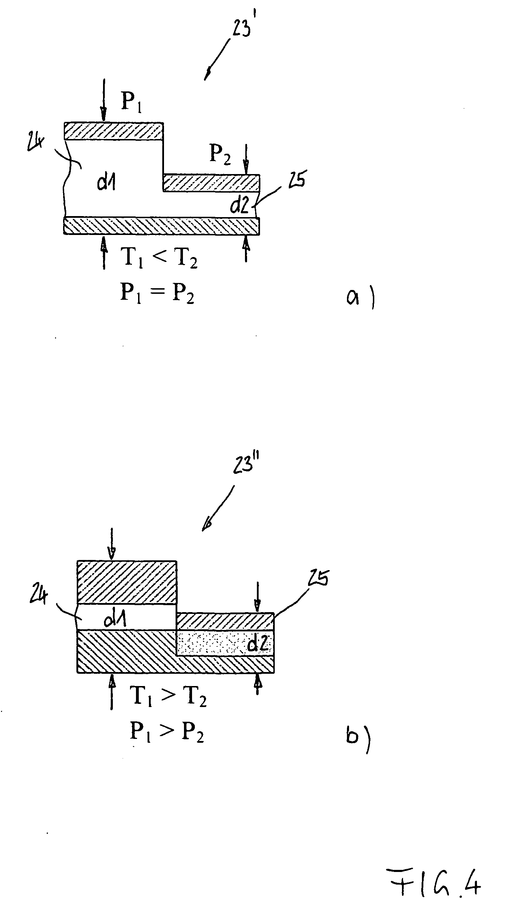

In Figur 4 sind an Bandabschnitten 23', 23" mit einem Abschnitt 24 größerer Dicke d1 und einem Abschnitt 25 kleinerer Dicke $d_2$ mit jeweils schraffierten Linien die Eindringtiefen a) bei einer Induktiven Erwärmung nach dem Stand der Technik und b) bei einer erfindungsgemäßen induktiven Erwärmung gezeigt.

Hierbei ist in Darstellung a) der Wärmeeintrag P1 im Bereich 24 großer Dicke ebensogroß, wie der Wärmeeintrag P2 im Bereich 25 kleiner Dicke. Hieraus ergibt sich eine im Hinblick auf die unterschiedlichen Dicken d1, d2 und damit auch auf die unterschiedlichen Massen eine Endtemperatur T1 im dicken Bereich 24, die kleiner ist als die Endtemperatur T2 im dünnen Bereich 25.

In Darstellung b) sind durch Auswahl einer niedrigeren Frequenz Eindringtiefen im dicken Bereich 24 erkennbar, die deutlich größer sind als die Hälfte der Dicke d2 des dünnen Bereichs 25. Dies führt zum Ergebnis, daß sich die Eindringtiefenbereiche im dünneren Bereich 25 überdecken. Im Überdeckungsbereich heben sich die induzierten Ströme auf, so daß effektiv nur ein Wärmeeintrag in den verbleibenden Bereichen stattfindet. Es ist somit der Wärmeeintrag P1 im dicken Bereich 24 wesentlich größer, als der Wärmeeintrag P2 im dünnen Bereich 25, so daß auch die Endtemperatur T1 im dicken Bereich 24 deutlich größer eingestellt werden kann, als die Endtemperatur T2 im dünnen Bereich 25.

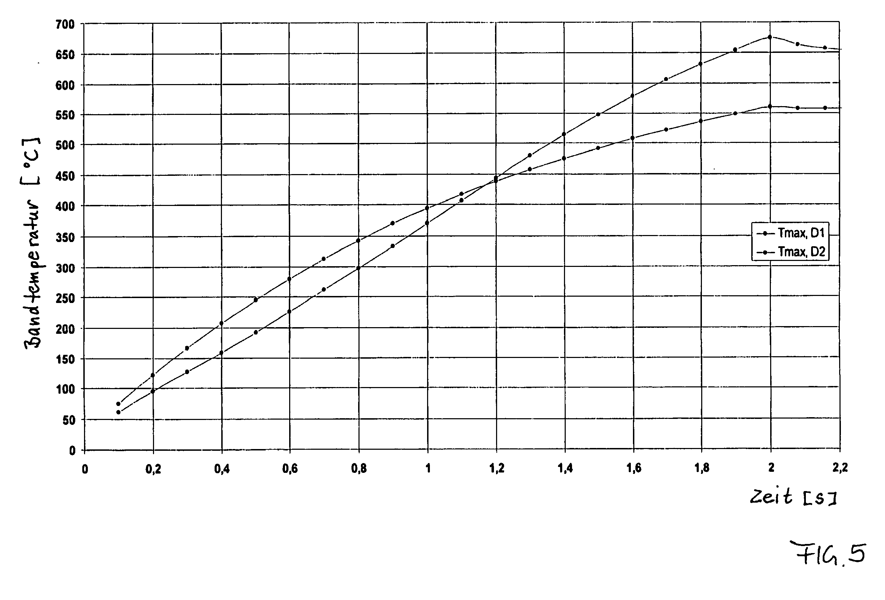

In Figur 5 ist der Temperaturverlauf für die in Figur 4b dargestellte Verfahrenstechnik für die Bereiche mit einer Blechdicke d1 von 4 mm und einer Blechdicke d2 von 2 mm bei einer Frequenz von 3,48 Hz über einen Zeitraum von 2 Sekunden Durchlaufzeit gezeigt. Die Temperatur steigt zunächst im dicken Bereich geringer, während der dünne Bereich zunächst stärker aufgeheizt wird, wobei nach 1,2 Sekunden eine Temperaturgleichheit bei 440°C erreicht ist. Danach ist ein weiteres Aufheizen im dickeren Bereich mit unveränderter Temperatursteigungsrate bis auf 680 °C möglich, während sich die weitere Aufheizung im dünneren Bereich abschwächt und nach 2 Sekunden nur 560 °C erreicht hat. Es ergibt sich nach 2 Sekunden ein Temperaturunterschied von mehr als 100 K zwischen dem dickeren Bandabschnitt (höhere Temperatur) und dem dünneren Bandabschnitt (geringere Temperatur).

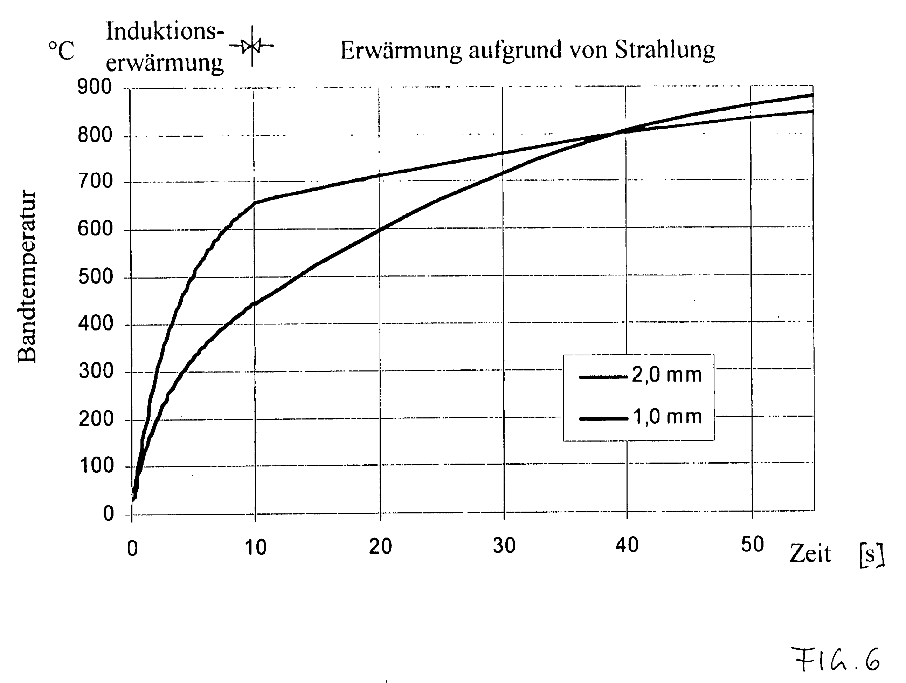

In Figur 6 ist der Temperaturverlauf eines dicken Bandabschnittes von 2,0 mm Dicke und eines dünnen Bandabschnittes von 1,0 mm Dicke über der Zeit dargestellt, wobei hier an den 10 Sekunden dauernden Bereich der Induktionserwärmung der weitere 45 Sekunden dauernde Bereich der Erwärmung auf Grund von Strahlung, das heißt also im Strahlungsofen, dargestellt ist. Auch hier ist erkennbar, daß mit der erfindungsgemäßen Induktionserwärmung der Temperatureintrag im dickeren Bereich wesentlich stärker gesteigert werden kann als im dünneren Bereich, während im Strahlungsofen eine Angleichung stattfindet, die nach weiteren 30 Sekunden zu einer Temperaturgleichheit bei über 800 °C führt. Von dieser Temperatur ausgehend kann eine Abschreckung erfolgen, wobei dann weitgehend homogene Materialeigenschaften am gesamten Band entstehen.

Bezugszeichenliste

| 11 | Coil |
| 12 | Coil |
| 13 | Band |
| 14 | Blechdickenmessung |
| 15 | Induktionsofen |
| 16 | Strahlungsofen |
| 17 | Abkühlzone |
| 18 | Längsfeldinduktor |
| 19 | Blech |
| 20 | Strompfeil |
| 21 | Vorschub |
| 22 | Strompfeil |
| 23 | Blechabschnitt |
| 24 | dicker Abschnitt |
| 25 | dünner Abschnitt |
| 26 | Übergangsabschnitt |

**Patentansprüche**

1. Verfahren zur kontinuierlichen Wärmebehandlung von Bandmaterial aus Stahl mit über der Länge periodisch veränderlicher Dicke ($d_1$, $d_2$), insbesondere von mit zeitlich veränderlichem Walzspalt flexibel gewalztem Band, wobei eine kontinuierliche Erwärmung des Bandmaterials im Durchlauf durch einen Induktionsofen erfolgt, in dem das Bandmaterial mit konstanter Frequenz induktiv erwärmt wird, die so gewählt ist, daß die rechnerische Eindringtiefe $\delta$ des induzierten Stromes, bis zu der das magnetische Feld auf 63 % Feldstärke des Außenfeldes abgeklungen ist, größer ist, als die halbe Dicke der Bandabschnitte mit geringster Dicke ($d_2$).

2. Verfahren nach Anspruch 1,
   **dadurch gekennzeichnet,**
   **daß** das Bandmaterial mit konstanter Frequenz induktiv erwärmt wird, die so gewählt ist, daß die rechnerische Eindringtiefe $\delta$ des induzierten Stromes, bis zu der das magnetische Feld auf 63 % Feldstärke des Außenfeldes abgeklungen ist, geringer ist, als die halbe Dicke der Bandabschnitte mit größter Dicke ($d_1$).

3. Verfahren nach einem der Ansprüche 1 oder 2,
   **dadurch gekennzeichnet,**
   **daß** die Bandabschnitte unterschiedlicher Dicke ($d_1$, $d_2$) induktiv auf eine annähernd gleiche Endtemperatur erwärmt werden.

4. Verfahren nach einem der Ansprüche 1 oder 2,
   **dadurch gekennzeichnet,**
   **daß** die Bandabschnitte unterschiedlicher Dicke ($d_1$, $d_2$) induktiv auf unterschiedliche Endtemperaturen erwärmt werden.

5. Verfahren nach einem der Ansprüche 1 bis 4,
   **dadurch gekennzeichnet,**
   **daß** das Bandmaterial in einem Längsfeldinduktor erwärmt wird.

6. Verfahren nach einem der Ansprüche 1 bis 5,
   **dadurch gekennzeichnet,**
   **daß** das Bandmaterial maximal bis zur Curietemperatur (769°C) induktiv erwärmt wird.

7. Verfahren nach einem der Ansprüche 1 bis 6,
   **dadurch gekennzeichnet,**
   **daß** das Bandmaterial mit einer Aufheizrate von größer 20 K/sec induktiv erwärmt wird.

8. Verfahren nach einem der Ansprüche 1 bis 7,
   **dadurch gekennzeichnet,**
   **daß** das Bandmaterial im Anschluß an die induktive Erwärmung im Durchlauf durch einen Konvektions- oder Strahlungsofen auf eine weiter erhöhte Temperatur gebracht wird.

9. Verfahren nach Anspruch 8,
**dadurch gekennzeichnet,**
**daß** die Bandabschnitte unterschiedlicher Dicke ($d_1$, $d_2$) im Konvektions- oder Strahlungsofen auf eine annähernd gleiche Endtemperatur erwärmt werden.

10. Verfahren nach Anspruch 8,
**dadurch gekennzeichnet,**
**daß** die Bandabschnitte unterschiedlicher Dicke ($d_1$, $d_2$) im Konvektions- oder Strahlungsofen auf differenzierte Endtemperaturen erwärmt werden.

11. Verfahren nach einem der Ansprüche 8 bis 10,
**dadurch gekennzeichnet,**
**daß** das Bandmaterial nach dem Erwärmen im Konvektions- oder Strahlungsofen mit einer Abkühlrate von mehr als 40 K/sec abgekühlt wird.

12. Verfahren nach einem der Ansprüche 1 bis 11,
**dadurch gekennzeichnet,**
**daß** das Bandmaterial in zur Bildung von Mehrphasenstahl geeigneter Qualität ausgewählt und mit einer Abkühlrate zur Bildung von Mehrphasenstahl abgekühlt wird.

13. Vorrichtung zur Durchführung des Verfahrens nach einem der Ansprüche 1 bis 12,
umfassend in Reihenschaltung zum Durchlauf von Bandmaterial aus Stahl mit über der Länge periodisch veränderlicher Dicke ($d_1$, $d_2$)

- eine Blechdickenmessung (14)
- zumindest einen Induktionsofen (15), in dem das Bandmaterial mit konstanter Frequenz induktiv erwärmbar ist, die so gewählt ist, daß die rechnerische Eindringtiefe $\delta$ des induzierten Stromes, bis zu der das magnetische Feld auf 63 % Feldstärke des Außenfeldes abgeklungen ist, größer ist, als die halbe Dicke der Bandabschnitte mit geringster Dicke ($d_2$),
- zumindest einen Konvektions- oder Strahlungsofen (16),
- eine Schnellabkühlungsvorrichtung (17)

in der angegebenen Reihenfolge.

14. Vorrichtung nach Anspruch 13,
**dadurch gekennzeichnet,**
**daß** der zumindest eine Induktionsofen (15) einen Längsfeldinduktor (18) aufweist.

## Claims

1. A process for the continuous heat treatment of steel strip material whose thickness ($d_1$, $d_2$) periodically varies along its length, more particularly of strip flexibly rolled with a roll gap varying as a function of time, wherein a continuous heat treatment of the strip material takes place while the strip material passes through an induction furnace in which the strip material is induction heated at a constant frequency which is selected such that the mathematical induction depth $\delta$ of the induced current up to which depth $\delta$ the magnetic field is decreased to 63% of the field strength of the outer field, is greater than half the thickness of the strip portions with the smallest thickness ($d_2$).

2. A process according to claim 1,
**characterised in**
**that** the strip material is induction-heated with a constant frequency which is selected such that the mathematical induction depth $\delta$ of the induced current up to which depth $\delta$ the magnetic field is decreased to 63% of the field strength of the outer field is smaller than half the thickness of the strip portions with the greatest thickness ($d_1$).

3. A process according to any one of claims 1 or 2,
**characterised in**
**that** the strip portions with different thicknesses ($d_1$, $d_2$) are induction heated to an approximately identical end temperature.

4. process according to any one of of claims 1 or 2,
**characterised in**
**that** the strip portions with different thicknesses ($d_1$, $d_2$) are induction heated to different end temperatures.

5. A process according to any one of claims 1 to 4,
**characterised in**
**that** the strip material is heated in a longitudinal field inductor.

6. process according to any one of claims 1 to 5,
**characterised in**
**that** the strip material is induction heated, at most, to the Curie temperature (769°C).

7. A process according to any one of claims 1 to 6,
**characterised in**
**that** the strip material is induction heated at a heating rate greater than 20 K/sec.

8. A process according to any one of claims 1 to 7,
**characterised in**

**that**, following the induction heating process, the strip material is heated to an even higher temperature, while passing through a convection or radiation furnace.

**9.** A process according to claim 8, **characterised in that** the strip portions of different thicknesses ($d_1$, $d_2$) are heated to approximately identical end temperatures in the induction or radiation furnace.

**10.** A process according to claim 8, **characterised in that** the strip portions of different thicknesses ($d_1$, $d_2$) are heated to differentiated end temperatures in the induction or radiation furnace.

**11.** A process according to any one of claims 8 to 10, **characterised in that**, after having been heated in the convection or radiation furnace, the strip material is cooled at a cooling rate in excess of 40 K/sec.

**12.** A process according to any one of claims 1 to 11, **characterised in that** the strip material is selected in a quality suitable for forming a polyphase steel and cooled at a cooling rate for forming polyphase steel.

**13.** A device for carrying out the process according to any one of claims 1 to 12, comprising, in series, for the passage of steel strip material whose thickness ($d_1$, $d_2$) varies periodically along its length:

- a sheet thickness measuring device (14),
- at least one induction furnace (15) in which the strip material can be induction-heated at a constant frequency which is selected such that the mathematical induction depth $\delta$ of the induced current, up to which depth $\delta$ the magnetic field is decreased to 63% of the field strength of the outer field, is greater than half the thickness of the strip portions with the smallest thickness ($d_2$),
- at least one convection or radiation furnace (16),
- a high-speed cooling device (17) in the sequence as given.

**14.** A device according to claim 13, **characterised in that** the at least one induction furnace (15) comprises a longitudinal field inductor (18).

## Revendications

**1.** Procédé pour le traitement thermique continu de feuillard en acier ayant une épaisseur périodiquement variable sur la longueur ($d_1$, $d_2$), en particulier de feuillard laminé de manière flexible avec une emprise variable au cours du temps, où un chauffage continu du feuillard a lieu lors du passage dans un four à induction où le feuillard est chauffé par induction à une fréquence constante qui est choisie de telle manière que la profondeur de pénétration théorique $\delta$ du courant induit jusqu'à laquelle le champ magnétique décroît à 63 % de l'intensité de champ du champ extérieur est supérieure à la demi-épaisseur des segments de feuillard de plus faible épaisseur ($d_2$).

**2.** Procédé selon la revendication 1, **caractérisé en ce que** le feuillard est chauffé par induction à une fréquence constante qui est choisie de telle manière que la profondeur de pénétration théorique $\delta$ du courant induit jusqu'à laquelle le champ magnétique décroît à 63 % de l'intensité de champ du champ extérieur, est inférieure à la demi-épaisseur des segments de feuillard de plus grande épaisseur ($d_1$).

**3.** Procédé selon l'une des revendications 1 ou 2, **caractérisé en ce que** les segments de feuillard d'épaisseur différente ($d_1$, $d_2$) sont chauffés par induction à une température finale sensiblement identique.

**4.** Procédé selon l'une des revendications 1 ou 2, **caractérisé en ce que** les segments de feuillard d'épaisseur différente ($d_1$, $d_2$) sont chauffés par induction à des températures finales différentes.

**5.** Procédé selon l'une des revendications 1 à 4, **caractérisé en ce que** le feuillard est chauffé dans un inducteur à champ longitudinal.

**6.** Procédé selon l'une des revendications 1 à 5, **caractérisé en ce que** le feuillard est chauffé par induction au maximum jusqu'à la température de Curie (769°C).

**7.** Procédé selon l'une des revendications 1 à 6, **caractérisé en ce que** le feuillard est chauffé par induction à une vitesse de chauffage supérieure à 20 K/s.

**8.** Procédé selon l'une des revendications 1 à 7, **caractérisé en ce que** le feuillard à la suite du chauffage par induction est amené lors du passage dans un four à convection ou à rayonnement à une température encore supérieure.

**9.** Procédé selon la revendication 8, **caractérisé en ce que** les segments de feuillard d'épaisseur différente ($d_1$, $d_2$) sont chauffés dans le four à convection ou à rayonnement à une température finale sensiblement identique.

**10.** Procédé selon la revendication 8, **caractérisé en ce que** les segments de feuillard d'épaisseur diffé-

rente ($d_1$, $d_2$) sont chauffés dans le four à convection ou à rayonnement à des températures finales différenciées.

11. Procédé selon l'une des revendications 8 à 10, **caractérisé en ce que** le feuillard après le chauffage dans le four à convection ou à rayonnement est refroidi à une vitesse de refroidissement supérieure à 40 K/s.

12. Procédé selon l'une des revendications 1 à 11, **caractérisé en ce que** le feuillard est choisi pour la formation d'un acier à plusieurs phases de qualité appropriée et est refroidi à une vitesse de refroidissement pour la formation d'un acier à plusieurs phases.

13. Dispositif pour la mise en oeuvre du procédé selon l'une des revendications 1 à 12, comprenant dans une installation en série pour le passage de feuillard en acier ayant une épaisseur périodiquement variable sur la longueur ($d_1$, $d_2$)

> - une mesure de l'épaisseur de tôle (14)
> - au moins un four à induction (15) dans lequel le feuillard est chauffé par induction à une fréquence constante qui est choisie de telle manière que la profondeur de pénétration théorique δ du courant induit jusqu'à laquelle le champ magnétique diminue à 63 % de l'intensité de champ du champ extérieur est supérieure à la demi-épaisseur des segments de feuillard de plus faible épaisseur ($d_2$),
> - au moins un four à convection ou à rayonnement (16),
> - un dispositif de refroidissement rapide (17)

dans l'ordre indiqué.

14. Dispositif selon la revendication 13, **caractérisé en ce que** le au moins un four à induction (15) comporte un inducteur à champ longitudinal (18).

FIG. 1

FIG.2

FIG.3

a)

b)

FIG.4

FIG. 5

FIG. 6

**EP 2 028 281 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004023886 A1
- JP 60002634 A
- EP 0107991 A1
- DE 1803129 A
- EP 0561667 A1